Europäisches Patentamt

European Patent Office

Office européen des brevets

(11) Veröffentlichungsnummer: **0 665 626 A1**

## (12) EUROPÄISCHE PATENTANMELDUNG

(21) Anmeldenummer: **95100040.5**

(22) Anmeldetag: **03.01.95**

(51) Int. Cl.6: **H02J 7/02**

(30) Priorität: **27.01.94 DE 4402348**

(43) Veröffentlichungstag der Anmeldung:
**02.08.95 Patentblatt 95/31**

(84) Benannte Vertragsstaaten:
**AT CH DE FR GB IT LI**

(71) Anmelder: **Jungheinrich Aktiengesellschaft
Friedrich-Ebert-Damm 129**

**D-22047 Hamburg (DE)**

(72) Erfinder: **Wrede, Hans Rudolf, Dipl. Ing.
Langenharmer Ring 97
D-22844 Norderstedt (DE)**

(74) Vertreter: **Graalfs, Edo, Dipl.-Ing. et al
Postfach 30 24 30
D-20308 Hamburg (DE)**

(54) Schaltungsanordnung für ein Batterie-Ladegerät.

(57) Schaltungsanordnung für ein Batterie-Ladegerät, mit einem Netzgleichrichter, einem Glättungskondensator, einem von einem mit Hochfrequenz betriebenen Oszillator angesteuerten Pulsweitensteller (PWM-Steller), einem Transformator, einem Ausgangsgleichrichter, einem Glättungsmittel am Ausgang des Ausgangsgleichrichters und einer dem PWM-Steller zugeordneten Regelschaltung zur Regelung des Ladestroms und/oder der Ladespannung über die Veränderung des Tastverhältnisses des PWM-Stellers, wobei die Frequenz des spannungsgesteuerten Oszillators in Abhängigkeit von den Augenblickswerten der pulsierenden Netzspannung am Ausgang des Netzgleichrichters verändert wird derart, daß sie annähernd im Scheitelwert maximal und mit kleiner werdenden Augenblickswerten kleiner ist.

FIG.1

Die Erfindung bezieht sich auf eine Schaltungsanordnung für ein Batterie-Ladegerät nach dem Oberbegriff des Patentanspruchs 1.

Die Netzstromaufnahme bei Ladegeräten soll nach Möglichkeit annähernd sinusförmig sein, d.h. oberwellenarm. Elektrische Verbraucher mit nicht sinusförmiger Stromaufnahme verzerren die Netzspannung (siehe hierzu Zeitschrift "antriebstechnik 31", 1992 Nr. 11 Thema "Oberschwingungsbelastung des Netzes durch Stromrichter und Frequenzumrichter"). Ziel soll sein, die Störbeeinflussung elektrischer Geräte zu reduzieren, die Verluste im Stromversorgungsnetz zu verringern und die übertragbare Leistung bei gegebener Maximalstromstärke eines Stromanschlusses deutlich zu erhöhen.

Es ist bekannt, diesem Problem durch die Verwendung passiver Filternetzwerke zu begegnen. Sie scheiden jedoch häufig wegen ihres Platzbedarfs, ihres Gewichts und ihrer zu hohen Kosten sowie zusätzlicher technischer Probleme (Resonanzerscheinungen) aus. Passive Filternetzwerke werden daher zum Beispiel nur noch für unterbrechnungsfreie Stromversorgungssysteme auf der Ausgangs- bzw. Energieabgabeseite verwendet ("Technische Mitteilungen AEG-Telefunken 67, 1977, Nr. 1, Seiten 54, 55 Bild 3").

In aktiven Filternetzwerken wird zumeist in zwei Stufen eine sinusförmige Netzstromaufnahme erreicht. In der ersten Stufe befindet sich das aktive Filter, das als Hochsetzsteller arbeitet mit einer entsprechenden Steuer- und Regelschaltung. Dadurch wird die sinusförmige Stromaufnahme bewerkstelligt. Die Eingangsspannung wird in eine konstante Gleichspannung umgewandelt. Sie liegt etwas oberhalb der Netz-Scheitelspannung. Eine derartige Schaltungsanordnung ist in "Schaltungsnetzteile in der Praxis, Otmar Tilgenstein, Vogel-Verlag, 2. Auflage, 1988, Seite 385, beschrieben. Die Ausgangsgleichspannung wird anschließend mit einem Steller, der nach der bekannten Pulsweitenmodulation arbeitet (PWM-Steller) in die gewünschte Spannung zur Batterieladung gewandelt. Mit Hilfe entsprechender Steuermittel kann somit der erforderliche Ladestrom für die Batterieladung vorgegeben werden. Eine derartige "Zweistufenschaltung" zur Speisung von Leuchtstofflampen ist in "Siemens Components 29 (1991) Heft 4" beschrieben. Anstelle eines PWM-Stellers wird ein Resonanzwandler verwendet.

Ein Hochsetzsteller als erste Stufe setzt einen großen Eingangsspannungsbereich der Netzspannung in eine höhere konstante Gleichspannung um (etwas höher als der Wert der maximalen Netzscheitelspannung). Die Gleichspannung wird dann mit einem üblichen PWM-Steller, einem Transformator und einem Gleichrichter auf die Spannung der zu ladenden Batterie umgesetzt. Eine derartige Schaltungsanordnung ist in "Design & Elektronik 5 vom 2.3.1993, Seite 54 Bild 2" offenbart.

Nachteilig bei den beschriebenen Schaltungsanordnungen ist der relativ hohe Aufwand für den Leistungspfad. Die Netzspannung wird in zwei Stufen umgesetzt, was zusätzliche Bauelemente erfordert, wie Hochsetzstellerdrossel, Leistungstransistor und die zugehörige Steuerung.

In der DE 42 13 096 ist auch bereits beschrieben, einen hohen Eingangsspannungsbereich in einer Stufe umzusetzen, indem ein PWM-Steller herangezogen wird. Ein Hochsetzsteller kann in Fortfall kommen.

Der Stromverlauf des Netzstroms nähert sich um so mehr der Sinushalbwelle der Netzspannung je niedriger die auf die Netzseite des Transformators transformierte Batteriespannung ist. Mit anderen Worten, der zu regelnde Eingangsspannungsbereich des PWM-Stellers vergrößert sich mit größer werdender Differenz zwischen der Netzscheitelspannung und der "abgebildeten" Batteriespannung. Aus dem bekannten Netzscheitelstrom kann der Transistor-Spitzenstrom bestimmt werden. Daraus ergibt sich, daß ein großer Eingangsspannungsbereich nur durch besondere Überdimensionierung der Leistungstransistoren zu erzielen ist. Bei hohen Eingangsspannungen dürfen die Transistoren nur kurze Zeit (kleine Ansteuerung) in den leitenden Zustand gesteuert werden. Damit ergeben sich hohe Spitzenströme. Nur hierdurch kann dann bei voller Aussteuerung auch bei niedrigen Eingangsspannungen Leistung übertragen werden.

Der Erfindung liegt daher die Aufgabe zugrunde, eine Schaltungsanordnung für ein Batterie-Ladegerät mit oberwellenarmer Netzstromaufnahme zu schaffen, bei der die Spitzenströme für die Halbleiter des PWM-Stellers verringert werden können.

Diese Aufgabe wird durch die Merkmale des Patentanspruchs 1 gelöst.

Bei der erfindungsgemäßen Schaltungsanordnung sind Mittel angegeben, um die Taktfrequenz des PWM-Stellers zu variieren. Dies geschieht durch einen spannungsgesteuerten Oszillator, dessen Frequenz in Abhängigkeit von den Augenblickswerten der pulsierenden Netzspannung am Ausgang des Netzgleichrichters verändert wird derart, daß die Frequenz im Scheitelwert maximal und mit kleiner werdenden Augenblickswerten kleiner wird.

Bei gleicher zu übertragenden Leistung wird der Transistorspitzenstrom um so größer, je kleiner das Tastverhältnis wird. Bei kleiner werdenden Augenblickswerten der Eingangsspannung innerhalb der Sinuswelle muß durch Vergrößern des Tastverhältnisses immer sichergestellt sein, daß die über die Taktfrequenz ermittelte primäre Spannung immer größer als die transformierte Batteriespannung ist. Da das Tastverhältnis nicht über einen Maximalwert gesteigert werden darf, beispielsweise bis maximal 0,5, ist hierdurch eine Einschränkung in der Stromflußzeit innerhalb der Sinushalbwelle gegeben.

Die Erfindung wird nachfolgend anhand von Zeichnungen näher erläutert.

Fig. 1    zeigt eine Schaltungsanordnung für ein Ladegerät nach der Erfindung.

Fig. 2    zeigt ein Schaltbild für einen Teil der Schaltungsanordnung nach Fig. 1.

Fig. 3    zeigt den Verlauf des lückenden Drosselstroms im Schaltbild nach Fig. 2.

An das Netz ist ein Netzgleichrichter 1 (Vollweggleichrichtung) angeschlossen, zu dem parallel ein Kondensator 1a geschaltet ist. Er weist nur für die hochfrequente Taktfrequenz (z.B. 100.000 Hz) eines PWM-Stellers 2 ein ausreichendes Speichervermögen auf. Ein Transformator 3 dient zur Potentialtrennung und Anpassung der Eingangsspannung an die Spannung einer zu ladenden Batterie 6. Die entsprechende Gleichrichtung erfolgt im Block 4, zu der auch eine Glättungs- bzw. Speicherdrossel gehört.

Ein Strommeßwiderstand 5 dient zur Messung des Stromistwertes des Batteriestroms, der auf den Mittelwertbildner 19 gegeben wird, wobei der gemittelte Iststrom 20 auf einen Mischpunkt 11 gelangt. Außerdem gelangt der Stromistwert auf einen Mischpunkt 14. Auf den Mischpunkt 11 wird auch ein Stromsollwert $I_{soll}$ gegeben, der zum Beispiel von einem Mikroprozessor (nicht gezeigt) vorgegeben ist nach Maßgabe der Batteriekennlinie. Die Regelabweichung gelangt auf einen Regelverstärker 12, dessen Ausgang auf einen Multiplizierer 13 gelangt, der einen neuen Sollwert 13a bildet für den Mischpunkt 14. Der neue Sollwert entsteht durch Multiplikation der Ausgangsgröße des Regelverstärkers 12 mit der Ausgangsgröße eines Sollwertbildners 9. Die Ausgangsgröße des Sollwertbildners 9 hat den Verlauf einer quadrierten Sinuskurve. Bekanntermaßen ist der aufgenommene Netzstrom des Netzgleichrichters 1 nur dann sinusförmig, wenn der Ausgangsstrom der Gleichricht- und Filtereinheit 4 diesem Verlauf folgt. Dies ist nur dann der Fall, wenn der Verlauf des Stromsollwertes dem Quadrat des sinusförmigen Verlaufs der pulsierenden Netzspannung am Ausgang des Gleichrichters ist. In einer Stufe 7, in der ein Filter mit Phasenkorrektur vorgesehen ist, wird aus der pulsierenden Gleichspannung des Netzrichters 1 der doppelte Frequenzwert der Netzspannung ausgefiltert und in der Phasenlage zur Netzspannung korrigiert. In der Stufe 9, dem Sollwertbildner, wird der gefilterten Spannung eine Gleichspannung so überlagert, daß der negative Spitzenwert der Ausgangsspannung der Stufe 7 gerade Null ergibt. Damit liefert der Multiplizierer 13 einen in der Amplitude der Regeldifferenz des Mischpunkts 11 proportionalen mit doppelter Netzfrequenz modulierten neuen Stromsollwert 13a. An dem Mischpunkt 14 wird zusammen mit dem Stromistwert eine neue Regelabweichung gebildet. Sie gelangt über einen Regelverstärker 15 als Stellwert 17 auf einen Pulsbreitenerzeuger 18. Er erhält zur Pulsbildung eine hochfrequente Dreieckspannung, aus der durch Vergleich mittels Komparator der Ausgangsimpuls für den PWM-Steller 2 gebildet wird.

In der Stufe 10 ist ein spannungsgesteuerter Oszillator mit einem Dreieckspannungsausgang 18 vorgesehen. Die Spannungssteuerung für den Oszillator 10 geschieht in der Stufe 8. Dort wird aus der pulsierenden Gleichspannung des Kondensators 1a ein ähnliches Signal zur Steuerung des Oszillators erzeugt. Hierdurch wird erreicht, daß im Scheitelwert der pulsierenden Gleichspannung eine maximale Frequenz und dem Minimum der pulsierenden Gleichspannung eine Minimalfrequenz 16 an den Pulsbreitenerzeuger 18 geliefert wird. Trotz unterlagerter Frequenzmodulation bleibt das vorgegebene Tastverhältnis 17, das vom Regelverstärker 15 vorgegeben wird, im Ausgangssignal erhalten. Die Speicherdrossel in der Stufe 4 dient der maßgeblichen Energiespeicherung und -abgabe bei der Taktfrequenzabsenkung im PWM-Steller 2.

Durch die Frequenzvariation kann entsprechend den zuvor erläuterten Zusammenhängen der Aussteuerbereich der Transistoren im PWM-Steller 2 verringert werden. Damit ist es möglich, die hohen Spitzenströme der Leistungstransistoren im PWM-Steller zu reduzieren, was sich günstig im Aufwand und in den Wärmeverlusten auswirkt.

Die zumeist vorgesehene Spannungsregelung wurde im Ausführungsbeispiel aus Vereinfachungsgründen fortgelassen.

Die am Transformator 3 sekundärseitig anstehende impulsförmige Spannungsamplitude $U_s$ ist:

$$U_s = ü_{Tr}.U_{Nmax}.\sin(\omega\,t)$$

Für den Batteriestrom $i_B$ gilt folgende Beziehung:

$$i_B = (U_s.v_T - U_B)/R_i,$$

wobei $ü_{Tr}$ der Übertragungsfaktor des Transformators 3, $U_N$ die Netzspannung, $U_B$ die Batteriespannung, $R_i$ der Widerstand des Sekundärkreises und $v_T$ das Tastverhältnis für eine Taktperiode der Taktfrequenz des PWM-Stellers ist.

In die Batterie fließt ein Strom $i_B$, wenn folgende Bedingung eingehalten wird:

$$U_s.v_T > = U_B$$

Durch die Lehre der Erfindung wird auch ein Batteriestrom erhalten, wenn

$$U_s.v_T < U_B$$

ist.

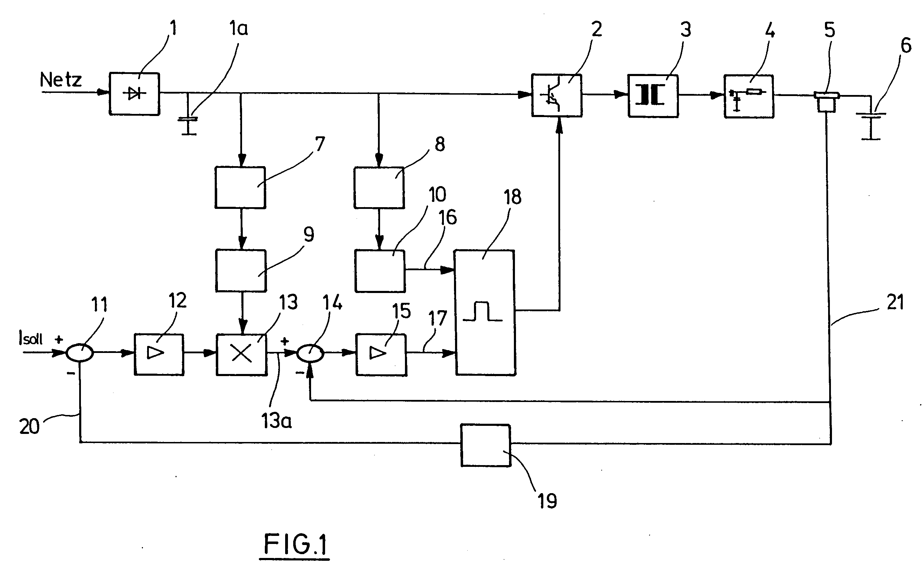

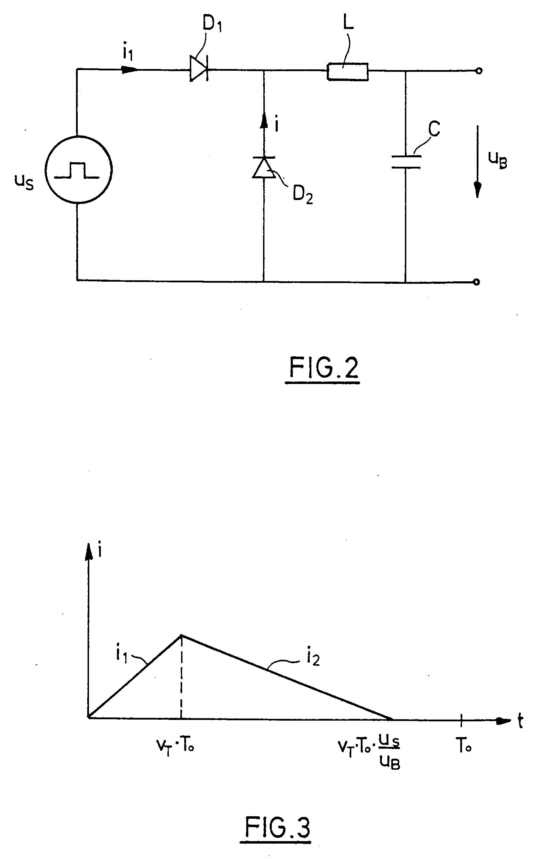

Zur Herleitung des lückenden Drosselstroms ist der Schaltungsteil 4 nach Fig. 1 in Fig. 2 noch einmal herausgestellt. Während der Zeit, in der ein Impuls $U_s$ ansteht, fließt der Strom $i_1$. Danach der Strom $i_2$. Nachfolgend soll der Batteriestrom $i_B$ als Funktion der Taktfrequenz ft bei lückendem Drosselstrom hergeleitet werden. Für den ansteigenden Strom $i_1$ der Drossel L ergibt sich:

$$i_1 = \tfrac{1}{L} (U_s - U_B) * t \tag{1}$$

Dies gilt für den Zeitbereich

$$O < t < V_{Tmax} * T_o$$

Für den fallenden Strom gilt:

$$i_2 = \tfrac{1}{L} U_B t + \tfrac{1}{L} V_T T_o U_s \tag{2}$$

Diese Gleichung gilt im Zeitbereich:

$$V_{Tmax} * T_o < V_{Tmax} * T_o * U_s/U_B < T_o$$

Zur Herleitung des mittleren Gleichstroms $i_B$ wird davon ausgegangen, daß die in den Kondensator C hineinfließende Ladungsmenge $Q_{ein}$ gleich der abfließenden Ladungsmenge $Q_{aus}$ ist.

$$Q_{ein} = Q_{aus} \tag{3}$$

Für die hineinfließende Ladungsmenge sind jeweils für die Ströme $i_1$ und $i_2$ die Teilladungsmengen zu bestimmen. Es gilt für die Teilladungsmenge $Q_1$ des Stromes $i_1$:

$$Q_1 = \int_{O}^{V_T * T_o} i_1 dt \tag{4}$$

Für die Teilladungsmenge $Q_2$ des Stromes $i_2$ gilt:

$$Q_2 = \int_{V_T * T_o}^{V_T * T_o * \frac{U_s}{U_B}} i_2 dt \tag{5}$$

Werden die Ströme aus Formel (1) und Formel (2) in die Gleichungen (3) und (4) eingesetzt, ergibt eine anschließende Auswertung der Integrale für die in den Kondensator eingeladene Ladungsmenge $Q_{ein}$:

$$Q_{ein} = Q_1 + Q_2 = \frac{V_T^2 \ T^2}{2 \ L} \ (\frac{U_S^2}{U_B} - U_S) \qquad (6)$$

Für die abgegebene Ladungsmenge $Q_{aus}$ des Kondensators gilt:

$$Q_{aus} = i_B * T_O = i_B \ \frac{1}{f_T} \qquad (7)$$

In der Gleichsgewichtsbeziehung gemäß Formel (3) ergibt sich damit für den Strom $i_B$, der gleichzeitig der Ladestrom der Batterie ist, die Abhängigkeit von der Taktfrequenz $f_T$. Hierzu werden Formeln (6) und (7) in Formel (3) eingesetzt und nach $i_B$ aufgelöst. Für $V_T$ wird $V_{Tmax}$ eingesetzt. Das Ergebnis lautet mithin:

$$i_B = \frac{1}{f_T} * \frac{V_{Tmax}^2}{2 \ L} \ (\frac{U_S^2}{U_B} - U_S) \qquad (8)$$

Man erkennt aus der angegebenen Beziehung, daß ein höherer Batteriestrom durch Herabsetzung der Taktfrequenz $f_T$ erzielt werden kann, obwohl die Batteriespannung höher als der Mittelwert der Transformator-Ausgangsspannung $U_s.V_{Tmax}$ ist. Oder anders ausgedrückt, wenn der Augenblickswert der Netzspannung sinkt, so daß der Mittelwert der Transformator-Ausgangsspannun $U_s.V_{Tmax} < U_B$ ist, dann kann dennoch ein ausreichender Stromfluß durch Herabsetzung der Taktfrequenz $f_T$ erreicht werden.

**Patentansprüche**

1. Schaltungsanordnung für ein Batterie-Ladegerät, mit einem Netzgleichrichter, einem Glättungskondensator, einem von einem mit Hochfrequenz betriebenen Oszillator angesteuerten Pulsweitensteller (PWM-Steller), einem Transformator, einem Ausgangsgleichrichter, einem Glättungsmittel am Ausgang des Ausgangsgleichrichters und einer dem PWM-Steller zugeordneten Regelschaltung zur Regelung des Ladestroms und/oder der Ladespannung über die Veränderung des Tastverhältnisses des PWM-Stellers, dadurch gekennzeichnet, daß die Frequenz des spannungsgesteuerten Oszillators (10) in Abhängigkeit von den Augenblickswerten der pulsierenden Netzspannung am Ausgang des Netzgleichrichters (1) verändert wird derart, daß sie annähernd im Scheitelwert maximal und mit kleiner werdenden Augenblickswerten kleiner ist.

2. Schaltungsanordnung nach Anspruch 1, dadurch gekennzeichnet, daß die Frequenz des Oszillators (10) proportional mit den Augenblickswerten der pulsierenden Endspannung geändert wird.

3. Schaltungsanordnung nach Anspruch 1 oder 2, dadurch gekennzeichnet, daß die Glättungsmittel eine Glättungsdrossel (4) aufweisen.

4. Schaltungsanordnung nach einem der Ansprüche 1 bis 3, gekennzeichnet durch ihre Anwendung auf eine Regelschaltung, bei der der Sollwert für den Ladestrom den Verlauf einer quadrierten Sinuskurve hat.

5. Schaltungsanordnung nach Anspruch 4, dadurch gekennzeichnet, daß zur quadrierten Sollwertbildung mit Hilfe eines Filters (7) mit Phasenkorrektur aus der pulsierenden Gleichspannung des Netzgleichrichters (1) die doppelte Frequenz der Netzspannung ausgefiltert und in der Phasenlage zur Netzspannung korrigiert wird, wobei in einem Sollwertbildner (9) die gefilterte Spannung einer Gleichspannung so überlagert wird, daß der negative Spitzenwert gerade Null ergibt zwecks Multiplikation mit der Regelgröße eines Regelverstärkers (12), auf den die Regelabweichung von Istladestrom und Solllade-

strom gegeben wird.

FIG.1

FIG.2

FIG.3

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FIFTH EUROPEAN CONFERENCE ON POWER ELECTRONICS AND APPLICATIONS, BD. 4: CONTROL IN POWER ELECTRONICS, 13. September 1993, BRIGHTON UK Seiten 1 - 7 M. WILLERS ET AL. 'An AC-DC Converter with low input distorsion and near unity power factor' * Seite 1, linke Spalte, letzter Absatz * * Seite 2, linke Spalte, Absatz 2 - rechte Spalte, Absatz 1 * * Seite 5, rechte Spalte, Absatz 3 -letzter Absatz; Abbildungen 1,10 * | 1,2 | H02J7/02 |
| Y | | 3 | |
| Y | --- EP-A-0 390 079 (MATSUSHITA ELECTRIC WORKS, LTD.) * Zusammenfassung * * Spalte 5, Zeile 22 - Zeile 51; Abbildung 1 * --- | 3 | |
| A | US-A-5 146 398 (O. VILA-MASOT ET AL.) * Zusammenfassung * ----- | 1 | RECHERCHIERTE SACHGEBIETE (Int.Cl.6) H02J H02M |

Der vorliegende Recherchenbericht wurde für alle Patentansprüche erstellt

| Recherchenort | Abschlußdatum der Recherche | Prüfer |
|---|---|---|
| DEN HAAG | 17. März 1995 | Helot, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P04C03)